(19) Europäisches Patentamt
European Patent Office
Office européen des brevets

(11) **EP 3 267 390 A1**

(12) **EUROPEAN PATENT APPLICATION**
published in accordance with Art. 153(4) EPC

(43) Date of publication:
**10.01.2018 Bulletin 2018/02**

(51) Int Cl.:
**G06Q 50/16** (2012.01)   **G06Q 30/02** (2012.01)
**G06Q 50/10** (2012.01)

(21) Application number: **15883346.7**

(22) Date of filing: **24.11.2015**

(86) International application number:
**PCT/JP2015/082832**

(87) International publication number:
**WO 2016/136056 (01.09.2016 Gazette 2016/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.02.2015 JP 2015038208**

(71) Applicant: **Sony Corporation**
**Tokyo 108-0075 (JP)**

(72) Inventors:
• **TAKAMATSU, Shingo**
**Tokyo 108-0075 (JP)**
• **FUJITA, Takuya**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND PROGRAM**

(57)   [Object] To provide information useful to a variety of users engaged in real estate transactions.

[Solution] Provided is an information processing device, including: an information extraction unit that extracts information related to a second real estate property or a second transaction similar to a first real estate property or a first transaction occurring with respect to the first real estate property, on a basis of features of a real estate property or a transaction with respect to a real estate property; and a transaction result prediction unit that predicts a transaction result including a first price associated with the first real estate property in the first transaction, on a basis of the extracted information.

**FIG. 3**

EP 3 267 390 A1

**Description**

Technical Field

The present disclosure relates to an information processing device, an information processing method, and a program.

Background Art

Recently, even in real estate transactions, actions such as information searches and correspondence related to transactions often are being performed over a network such as the Internet. For example, Patent Literature 1 describes a technology that acquires user information and real estate information saved on a server, based on a user identifier and a real estate identifier input into a client, and creates an inspection invitation on which the acquired user information and real estate information are filled in.

Citation List

Patent Literature

Patent Literature 1:    JP 2003-281252A

Disclosure of Invention

Technical Problem

However, technology like that described in Patent Literature 1, for example, is usable only when a user who primarily is attempting to purchase or rent real estate searches for or inspects real estate. On the other hand, for example, for a variety of users engaged in real estate transactions (which may include not only users attempting to purchase or rent real estate, but may also include users attempting to sell or rent out real estate), technology capable of providing useful information for such users has not been proposed adequately as of yet.

Accordingly, the present disclosure proposes a new and improved information processing device, information processing method, and program capable of providing information useful to a variety of users engaged in real estate transactions.

Solution to Problem

According to the present disclosure, there is provided an information processing device, including: an information extraction unit that extracts information related to a second real estate property or a second transaction similar to a first real estate property or a first transaction occurring with respect to the first real estate property, on a basis of features of a real estate property or a transaction with respect to a real estate property; and a transaction result prediction unit that predicts a transaction result including a first price associated with the first real estate property in the first transaction, on a basis of the extracted information.

Further according to the present disclosure, there is provided an information processing method, executed by a processor, including: extracting information related to a second real estate property or a second transaction similar to a first real estate property or a first transaction occurring with respect to the first real estate property, on a basis of features of a real estate property or a transaction with respect to a real estate property; and predicting a transaction result including a first price associated with the first real estate property in the first transaction, on a basis of the extracted information.

Further according to the present disclosure, there is provided a program causing a computer to realize: a function of extracting information related to a second real estate property or a second transaction similar to a first real estate property or a first transaction occurring with respect to the first real estate property, on a basis of features of a real estate property or a transaction with respect to a real estate property; and a function of predicting a transaction result including a first price associated with the first real estate property in the first transaction, on a basis of the extracted information.

Advantageous Effects of Invention

According to the present disclosure as described above, it is possible to provide information useful to a variety of users engaged in real estate transactions.

Note that the effects described above are not necessarily limitative. With or in the place of the above effects, there may be achieved any one of the effects described in this specification or other effects that may be grasped from this specification.

Brief Description of Drawings

[FIG. 1] FIG. 1 is a diagram illustrating a diagrammatic configuration of a system according to an embodiment of the present disclosure.

[FIG. 2] FIG. 2 is a block diagram illustrating an internal configuration of a system according to an embodiment of the present disclosure.

[FIG. 3] FIG. 3 is a block diagram illustrating an exemplary functional configuration of a database and a processing unit of a server according to an embodiment of the present disclosure.

[FIG. 4] FIG. 4 is a diagram illustrating an example of a property information input screen displayed in an embodiment of the present disclosure.

[FIG. 5] FIG. 5 is a diagram illustrating an example of a selling price review screen displayed in an embodiment of the present disclosure.

[FIG. 6] FIG. 6 is a diagram illustrating an example of a property comparison screen displayed in an embodiment of the present disclosure.

[FIG. 7] FIG. 7 is a diagram illustrating an example of a renovation proposal screen displayed in an embodiment of the present disclosure.

[FIG. 8] FIG. 8 is a diagram illustrating an example of a future prediction screen displayed in an embodiment of the present disclosure.

[FIG. 9] FIG. 9 is a block diagram illustrating an example hardware configuration of an information processing device according to an embodiment of the present disclosure.

Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Hereinafter, the description will proceed in the following order.

1. System configuration
2. Functional configuration

    2-1. Exemplary configuration of database
    2-2. Exemplary configuration of processing unit

3. Process of extracting similar property or similar transaction
4. Process of predicting price based on price of similar property or similar transaction
5. Process of predicting selling duration
6. Process of computing prediction accuracy
7. Binarization of bases of feature vectors
8. Example of presented information
9. Hardware configuration
10. Supplemental remarks

(1. System configuration)

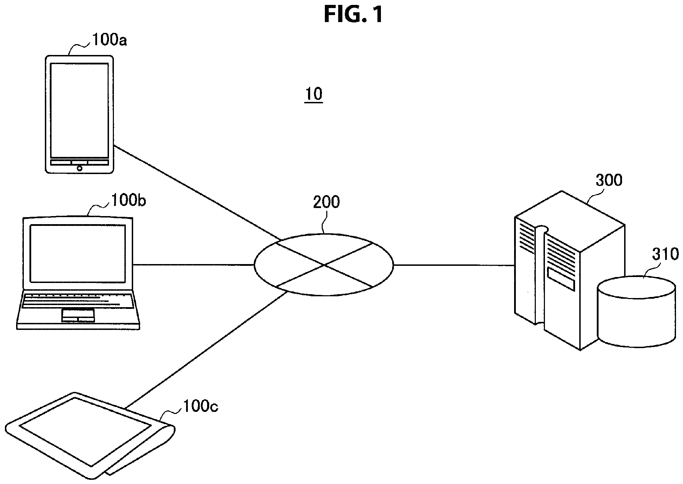

FIG. 1 is a diagram illustrating a diagrammatic configuration of a system according to an embodiment of the present disclosure. Referring to FIG. 1, a system 10 according to the present embodiment includes a client 100 and a server 300. The client 100 and the server 300 are connected by a network 200, and are able to communicate with each other.

The client 100 may include devices such as a smartphone 100a, a personal computer 100b, and a tablet 100c, for example. The client 100 is not limited to the illustrated example, and may include any type of terminal device having a function of inputting and outputting information with respect to a user. To output information to a user, the client 100 uses images, sound, and the like, for example. Additionally, the client 100 may accept the input of information from the user through operating input on the terminal device, sound indicating speech, an image indicating a gesture or line of sight, or the like.

The server 300 includes one or multiple server devices on a network. In the case of realizing the functions of the server 300 described hereinafter by having multiple server devices act cooperatively, the totality of the multiple server devices may be treated as a single information processing device. Alternatively, at least some of the server devices may be run by an operator different from the operator of the server 300 described hereinafter. In such a case, in the following description, part of the server 300 may be referred to as an external server not included in the system 10. In the present embodiment, at least one or some of the server devices include a database 310. The database 310 stores information related to real estate and transaction histories thereof.

The network 200 includes any of various types of wired or wireless networks, such as the Internet, a local area network (LAN), or a mobile phone network, for example. The network 200 connects the client 100 and the server 300, and may also connect multiple server devices included in the server 300. In cases in which multiple types of networks are included in the network 200, the network 200 may also include devices such as routers and hubs that interconnect such networks.

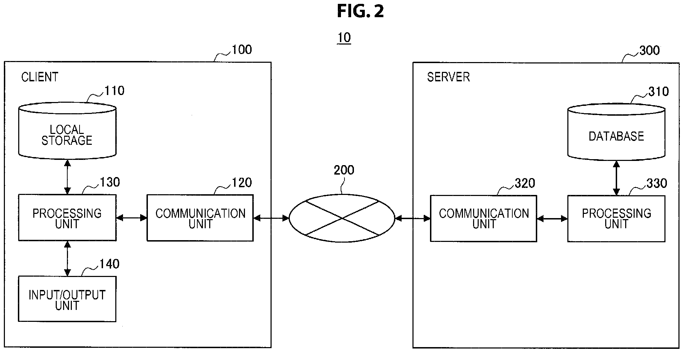

FIG. 2 is a block diagram illustrating an internal configuration of a system according to an embodiment of the present disclosure. Referring to FIG. 2, the client 100 may include local storage 110, a communication unit 120, a processing unit 130, and an input/output unit 140. The server 300 may include the database 310, a communication unit 320, and a processing unit 330. Hereinafter, each of the functional elements will be described further. Note that the terminal device that functions as the client 100, and the one or multiple server devices included in the server 300, are realized by the hardware configuration of the information processing device described later, for example.

(Client configuration)

The local storage 110 is realized by memory or storage included in the terminal device, for example. In the local storage 110, information provided by the server 300 over the network 200 and information input by the user through the input/output unit 140 is stored temporarily or persistently, for example. The user utilizes the information stored in the local storage 110 to reference information provided by the server 300 even while offline, or to input a draft of information to provide to the server 300.

The communication unit 120 communicates with the server 300 over the network 200. The communication unit 120 is realized, for example, by a communication device that executes communication on a network to which the client 100 is connected.

The processing unit 130 is realized by a processor such as a central processing unit (CPU) included in the terminal device, for example. For example, the processing unit 130 executes a process of requesting information from the server 300 through the communication unit 120, based on information input by the user through the input/output unit 140. As another example, the processing unit 130 executes a process of outputting information to the user through the input/output unit 140, based on information provided by the server 300 through the communication unit 120. At this point, the processing unit 130 may also execute a process of converting provided information into a suitable format according to the type of the input/output unit 140.

The input/output unit 140 is realized by an input device, such as a touch panel, mouse, keyboard, microphone, or camera (imaging device), and an output device, such as a display or speaker, included in the terminal device, for example. Note that the input/output unit 140 may also include only one of either an input device or an output device. For example, information received from the server 300 through the communication unit 120 is processed by the processing unit 130 and displayed on a display included in the input/output unit 140. As another example, user operating input acquired by a touch panel or the like included in the input/output unit 140 is processed by the processing unit 130 and transmitted to the server 300 through the communication unit 120.

Since the functions themselves of the processing unit 130 and the input/output unit 140 as above are similar to the functions of a processing unit and an input/output unit in a typical terminal device, for example, a detailed explanation thereof may be reduced or omitted in the following description of the present embodiment. However, even in such cases, if the information received from the server 300 is characteristic, for example, the functions of the processing unit 130 or the input/output unit 140 in the client 100 with respect to processing and outputting such information may also be characteristic compared to these functions in a typical terminal device.

(Server configuration)

The database 310 is realized by memory or storage included in the server device, for example. As described earlier, in the database 310, information related to real estate and transactions thereof is stored. Also, in the database 310, information related to a user of the client 100 may also be stored. Note that more specific types of information stored in the database 310 may differ depending on the content of the service provided by the server 300.

The communication unit 320 communicates with the client 100 over the network 200. Additionally, the communication unit 320 may also communicate with an external server over the network 200. The communication unit 320 is realized by a communication device that executes communication on a network, for example, to which the server 300 is connected.

The processing unit 330 is realized by a processor such as a CPU included in the server device, for example. For example, the processing unit 330 executes a process of acquiring information from the database 310 based on information received from the client 100 through the communication unit 320, and after processing the acquired information as necessary, transmitting to the client 100 through the communication unit 320.

Note that if the server 300 includes multiple server devices, the functional configuration of the server 300 described above may be realized distributed among the multiple server devices. For example, the functions of the database 310 may be realized by being concentrated in one of the server devices, or may be realized by centrally operating and managing a database distributed among multiple server devices. As another example, the functions of the processing unit 330 may also be realized by centrally operating and managing a processor distributed among multiple server devices. In this case, the functions of the processing unit 330 described hereinafter may be realized by being distributed serially or in parallel among multiple server devices, regardless of the demarcations of the function blocks defined for the sake of explanation.

(2. Functional configuration)

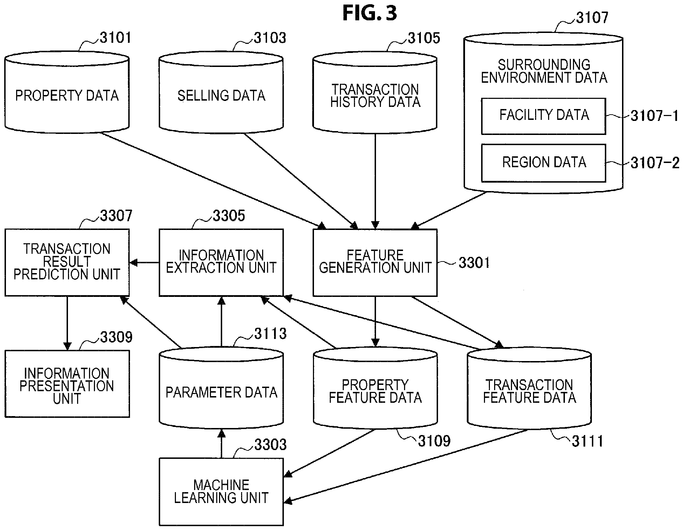

FIG. 3 is a block diagram illustrating an exemplary functional configuration of a database and a processing unit of a server according to an embodiment of the present disclosure. The diagram illustrates, as functions of the database 310 of the server 300, property data 3101, selling data 3103, transaction history data 3105, surrounding environment data 3107, property feature data 3109, transaction feature data 3111, and parameter data 3113. Additionally, the diagram illustrates, as functions of the processing unit 330, a feature generation unit 3301, a machine learning unit 3303, an information extraction unit 3305, a transaction result prediction unit 3307, and an information presentation unit 3309. Hereinafter, each of the structural elements will be described further.

(2-1. Exemplary configuration of database)

The property data 3101 functions as master data of real estate properties handled by the service provided by the server 300. The real estate properties may include any of various types of properties, such as land, freestanding buildings, apartments, town houses, and commercial properties, for example. In the property data 3101, data related to these types of real estate properties is registered in association with an ID unique to each property, for example. More specifically, for example, data related to a piece of land may include information such as the type of property, the location, and the ground area. Data related to a building additionally may include information such as the floor area, the room arrangement, facilities, the construction date, the direction of openings, and the lighting state. Furthermore, the data may also include images of features such as the exterior and interior of the property, or the view from the property. If a building has been rebuilt or renovated, for example, data associated with a new ID may be added as a separate property, or a history of the rebuilding, renovation, or the like may be included in the property data 3101.

The selling data 3103 includes data related to the selling currently in progress of real estate properties registered in the property data 3101. More specifically, the selling data 3103 stores data such as the property ID, the selling date, the selling price (including a history of changes), the reason for selling, the current owner, the agent responsible for selling, and introductory text created by the owner or the agent at the time of selling. Note that in the present embodiment, the information related to the owner of the property is for the purpose of ascertaining the attributes of the owner, and thus it is not necessary to include information such as the owner's name. Instead, the owner may be represented by categories such as age and occupation. In the present embodiment, the selling data 3103 stores data related to properties currently for sale. Consequently, the selling data 3103 is unique with respect to the selling organization and the property ID (for example, if the same property is being sold in parallel by multiple agents, multiple sets of selling data 3103 may be created for each agent with respect to the same property ID). As described later, if a transaction is established for a property being sold, some or all of the selling data 3103 for that property is moved to the transaction history data 3105.

The transaction data 3105 includes data related to transactions established for real estate properties registered in the property data 3101. More specifically, the transaction data 3105 stores data such as the transaction ID, the property ID, the selling date, the contract date, the selling price (including a history of changes), the contract price, the reason for selling, the seller (old owner), the buyer (new owner), the agents on the seller side and the buyer side, and introductory text created by the owner or the agent at the time of selling. As described already, the transaction data 3105 may also be generated on the basis of the selling data 3103 of a property for which a transaction has been established. Alternatively, the transaction data 3105 may be generated by importing data about a transaction history provided by a service (including public services) provided by an external server. Whereas the selling data 3103 is unique with respect to the property ID as above, in the transaction data 3105, multiple sets of data may exist with respect to a single property ID, if the property is one for which transactions have been established multiple times in the past. Consequently, to identify each transaction uniquely as above, a separate transaction ID may also be set in the transaction data 3105.

The surrounding environment data 3107 (facility data 3107-1 and region data 3107-2) includes data related to the surrounding environment of real estate properties registered in the property data 3101. For example, the facility data 3107-1 includes data related to various types of facilities located in the vicinity of the real estate property. In this case, the facility data 3107-1 may include information such as a facility's position information, type, name, and opening/closing dates. The facilities include, for example, transportation facilities such as train stations, shops, evacuation facilities, parks, medical institutions, and schools. In the present embodiment, as described later, features are extracted on the basis of the distances between the location of a property and the positions of facilities. Also, for example, the region data 3107-2 may include data related to regions where a property is located. In this case, the region data 3107-2 may include information such as the extent and type of a region, and the dates when a region is designated/undesignated. Regions include government districts, disaster warning regions, and zoning for urban planning, for example. In the present embodiment, as described later, features are extracted on the basis of regions that include the location of a property.

The property feature data 3109 includes data about features of real estate properties registered in the property data 3101 (hereinafter designated property features). For example, property features are generated by the feature generation unit 3301 on the basis of the property data 3101, the selling data 3103, the transaction data 3105, and/or the surrounding environment data 3107. More specifically, for example, property features may be vectors extracted from respective data items with respect to a certain property (specified by property ID). In the property feature data 3109, such property feature vectors may be stored in association with the property ID. Unlike the transaction feature data 3111, in the property feature data 3109, property features basically are stored in a 1-to-1 manner with respect to a property. Consequently, the property feature data 3109 may be utilized as information expressing the current state of a property, for example. Note that a process by the feature generation unit 3301 for generating property features will be described later in detail.

The transaction feature data 3111 includes data about features of transactions dealing with real estate properties registered in the property data 3101 (hereinafter designated transaction features). For example, transaction features are generated by the feature generation unit 3301 on the basis of the property data 3101, the selling data 3103, the transaction data 3105, and/or the surrounding environment data 3107. More specifically, for example, transaction features may be vectors extracted from data items related to a transaction with respect to transactions registered in the transaction data 3105. In the transaction feature data 3111, such transaction feature vectors may be stored in association with the transaction ID included in the transaction data 3105, for example. As the simplest configuration, transaction features may include only features extracted from data about dates and prices included in the transaction data 3105. In this case, prices may be converted to units that simplify comparisons between properties (for example, the selling price or contract price per square meter).

Additionally, the transaction features may also include features extracted from the data related to the selling currently in progress included in the selling data 3103. In this case, the transaction feature data 3111 includes transaction features related to completed transactions, and transaction features related to uncompleted transactions. Additionally, the transaction features may also include features extracted from the property data 3101 and the surrounding environment data 3107 as information expressing the state of a property at the time of a transaction (in other words, a snapshot of the property features at a point in the past). Note that a process by the feature generation unit 3301 for generating transaction features will be described later in detail.

The parameter data 3113 includes various types of parameters used in processes by the information extraction unit 3305 and the transaction result prediction unit 3307. The parameters are computed by the machine learning unit 3303, for example. As described later, in the present embodiment, in the above processes, when computing the similarity between a first real estate property which is a target of price prediction, or a transaction of the first real estate property, and a second real estate property for which a transaction has been established already or which is currently for sale, or a transaction of the second real estate property, weighting parameters set for each item of the property features or the transaction features are utilized. Also, when performing price prediction on the basis of the price of a property or transaction having a high similarity computed in this way, parameters are also utilized to correct the price. The parameter data 3113 stores parameters like the above, for example. Note that each of these parameters will be described later in detail.

Lastly, the features which may be included in the property feature data 3109 and the transaction feature data 3111 described above will be illustrated further by way of examples. Property features (room arrangement, age, size, structure, number of floors, right of site), nearby facility features (nearest station, nearest supermarket, nearest bus station, nearest expressway entrance, dams, evacuation facilities, sightseeing facilities, parks, public facilities, medical institutions, schools), surrounding region features (crime map, height above sea level, cliffs, liquefaction, seashore, rivers, forests, farmland, government districts, urban planning, heavy snowfall regions, soil, disaster map, average temperature, weather, along major roadway, beside railway line, airbase, island, peninsula), property photos (exterior photos, view from veranda, floor plan, rooms. Since information which has not been quantified as data may be acquired, such as the grade of apartment and the view, the prediction accuracy is improved), explanation of the property (text of property sales pitch, word-of-mouth from social media. Since information which has not been quantified as data may be acquired, such as whether or not the property is a maisonette, the amount of sunshine, and the reputation, the prediction accuracy is improved), sensor data (surrounding noise, amount of sunshine, ventilation, fallen leaves, signal reception), neighborhood residents, population movement log (popularity of region, taxis, amount of human movement. By utilizing GPS information about people acquired in real-time from mobile devices such as smartphones, factors such as the popularity of a region can be observed, thereby improving the prediction accuracy), economic indicators (average stock prices, employment statistics, increase or decrease of population in region), roads surrounding land (in the case of a detached house), renovation information, the number of similar properties currently for sale, recent sales performance, selling duration (since the current state of the market may be incorporated into the prediction, the prediction accuracy is improved), the intermediary company for negotiating, the owner, roadside land values, official land values, the lease, property taxes, the reason for selling, the reason for purchasing (such as moving due to a change in family structure, moving due to job transfer, moving due to marriage or divorce, moving due to dissatisfaction with the property, or purchasing as an investment. Since the reason can affect the contract price, the prediction accuracy is improved), the buying and selling period, circumstances for wanting to sell quickly (such as moving due to a change in family structure, moving due to job transfer, moving due to marriage or divorce, moving due to dissatisfaction with the property, purchasing as an investment, or selling off an inherited property. Since in some cases a person may want to sell quickly even at a low price, by utilizing the buying and selling period, the prediction accuracy is improved), administrative expenses, rent, parking fees, vacancy rate (there is a tendency for the price to fall if an apartment building or the like has a high vacancy rate), the number of real estate transactions in the region (there is a tendency for the price to rise if there are many real estate transactions in the region), the amount of money spent on advertising while selling, and whether or not the property is stigmatized.

(2-2. Exemplary configuration of processing unit)

The feature generation unit 3301 generates features of a real estate property (property features) and features of a transaction involving the real estate property (transaction features), on the basis of the property data 3101, the selling data 3103, the transaction data 3105, and/or the surrounding environment data 3107. The generated features may be stored as the property feature data 3109 and the transaction feature data 3111. At this point, as described above, the property features and the transaction features may be vectors extracted from data (feature vectors). Such feature vectors may also be generated by simply concatenating items of data, for example. For example, by setting category values with respect to direction items, such as "East=1, South=2, West=3, North=4", the direction may be handled as a numerical value. Likewise, for location, category values may be set with respect to municipalities or street names, for example, or the location may be expressed by latitude and longitude, and thereby may be handled as a numerical value. Note that, as described later, as part of such numerical quantification, the binarization of vectors constituting the bases of the feature vectors may also be performed.

At this point, for items which are recorded as continuous numerical values, such as the ground area and the floor area included in the property data 3101, the feature generation unit 3301 may generate features by handling the items directly as numerical values, or handle the items as data which has been binarized by dividing the range of the numerical value into bins of suitable width. For items recorded as dates, such as the construction date, the selling date, and the contract date, the items may be handled similarly as continuous numerical values, or the year and the month may be extracted respectively from the dates and handled as separate data. For example, in the case of the construction date, the age of a building may be expressed primarily in years. As another example, in the case of the selling date and the contract date, the long-term demand trend may be expressed primarily in years primarily, while the short-term demand trend within a one-year cycle may be expressed in months.

Also, from images such as the exterior and interior of a property or the view from the property which are included in the property data 3101, image analysis using any of various known techniques may be utilized to extract feature vectors of the images. The feature generation unit 3301 may incorporate the extracted feature vectors of images directly into the vectors of the property features and the transaction features, or the images may be classified in accordance with the features (by clustering, for example) first, and then category values corresponding to the classification results may be incorporated into the vectors of the property features and the transaction features. Similarly, for text such as the introductory text from the time of selling included in the selling data 3103, for example, by analyzing the text with known technology such as morphological analysis, and extracting characteristic words from the text, feature vectors may be extracted.

Furthermore, the features generated by the feature generation unit 3301 may include new items generated by combining multiple pieces of data. More specifically, for example, the feature generation unit 3301 may generate features related to nearby facilities usable at a property, on the basis of the location of the property extracted from the property data 3101, and the position information of facilities extracted from the facility data 3107-1. Whether or not a nearby facility is usable may be determined on the basis of the distance between the location of the property and the position of the facility, for example. Features related to nearby facilities may be binary features indicating whether or not each type of facility is usable, the number of usable facilities, and/or classed values indicating the ease of use on the basis of the distance to a usable facility. For example, if the facility data 3107-1 includes the opening/closing dates of facilities, in the transaction features it is also possible to express the differences between which facilities were usable at the time of a past transaction and which facilities are usable currently (such as if a new park is developed, a medical institution changes location, or a new bus route is established).

As another example, the feature generation unit 3301 may also generate features related to the geographical characteristics of a property, on the basis of the location of the property extracted from the property data 3101, and the data related to the region included in the region data 3107-2. Similarly to the case of features related to nearby facilities, if the region data 3107-2 includes the dates when a region is designated/undesignated, in the transaction features it is also possible to express the differences between the characteristics of the region at the time of a past transaction and the characteristics of the region currently (such as if the region stops being designated a disaster-prone area as a result of disaster prevention work, or if the construction of high-rise buildings becomes possible due to changes in zoning for urban planning).

The machine learning unit 3303 performs machine learning based on the property feature data 3109 and the transaction feature data 3111, and decides various types of parameters to be used in the processes by the information extraction unit 3305 and the transaction result prediction unit 3307. For example, the parameters include weighting parameters set for each item of a property feature or a transaction feature for when the information extraction unit 3305 determines whether or not a property or a transaction is similar. In this case, for example, the machine learning unit 3303 learns a relationship between the property features and/or transaction features, and the contract price, and decides parameters so that the similarity computed using the parameters rises for properties indicating the same kind of trend in the transaction price. As another example, the parameters may include parameters for correcting the price and the selling duration when the transaction result prediction unit 3307 predicts the price and the selling duration on the basis of information related to properties or transactions having a high similarity. In this case, for example, the machine learning unit 3303 learns a relationship between features and the contract price that properties or transactions with a high similarity have with each other, and decides parameters so that differences in the features are suitably reflected in the predicted price. Note that when deciding parameters like the above by machine learning, the machine learning unit 3303 may utilize any of various known types of algorithms, such as the gradient method, for example.

The information extraction unit 3305 extracts information related to another real estate property (second real estate property) that is similar to a real estate property (first real estate property) which is the target of price prediction, and/or another transaction (second transaction) that is similar to a transaction (first transaction) occurring with respect to a real estate property which is the target of price prediction, on the basis of the property feature data 3109, the transaction feature data 3111, and the parameters computed by the machine learning unit 3303. More specifically, for example, the information extraction unit 3305 extracts the property features of the second real estate property from the property feature data 3109, and extracts the transaction features of the second transaction from the transaction feature data 3111. The information extracted by the information extraction unit 3305 may not only provided to the transaction result prediction unit 3307 and used for price prediction, but may also be provided to the information presentation unit 3309 and utilized to generate information to present to the user.

The transaction result prediction unit 3307 predicts a transaction result, including the price of the real estate property in the transaction, on the basis of the information extracted by the information extraction unit 3305 and the parameters computed by the machine learning unit 3303. For example, the prediction of a price is performed before putting out the target property for sale, or in other words during the stage when the owner is considering selling. In this case, the contract price of the target property may be predicted on the basis of information about similar properties and transactions extracted by the information extraction unit 3305. Also, the prediction of a price may be performed after putting out the target property for sale, during the stage when a transaction has not been established yet. In this case, it is possible to predict a price considered to be suitable for establishing a transaction, on the basis of information similar to the above, and information related to the selling of the target property (such as the selling price and the selling date). Furthermore, the prediction of a price may also be performed after the establishment of a transaction for the target property. In this case, the predicted result of the price is fed back into the machine learning unit 3303 and utilized in learning based on the difference from the actual contract price or the like, for example. The transaction result prediction unit 3307 may also predict the duration until a transaction is established (selling duration), similarly to the price. Additionally, the transaction result prediction unit 3307 may also compute the accuracy of the prediction with respect to the price and the duration. Note that accuracy will be described later in a detailed example of the prediction process by the transaction result prediction unit 3307.

The information presentation unit 3309 presents to the user, via the client 100, information including the price of the real estate property predicted by the transaction result prediction unit 3307 and the like. More specifically, the information presentation unit 3309 generates data for outputting an image to a display included in the input/output unit 140 of the client 100, and causes the generated data to be transmitted from the communication unit 320 to the client 100. Note that the method of outputting information to the client 100 is not limited to image display. For example, audio output may be adopted instead of, or in addition to, image display.

(3. Process of extracting similar property or similar transaction)

Next, the process of extracting a similar property or a similar transaction, which is performed by the information extraction unit 3305 included in the processing unit 330 of the server 300 in the present embodiment, will be described further. Note that although the following describes a process of extracting a similar property as a representative example, the process of extracting a similar transaction may be performed in a similar manner.

First, the feature generation unit 3301 generates property features for each real estate property registered in the property data 3101, on the basis of the property data 3101, the selling data 3103, the transaction data 3105, and/or the surrounding environment data 3107. In the information extraction unit 3305, from among K-dimensional property feature vectors respectively generated for n registered properties, a distance function $D(X_i, X_j)$ between $X_i$ and $X_j$ (where $i, j \in 1, 2, ..., N; i \neq j$) is defined like in Formula 1 below. Note that $x_{ki}$ and $x_{kj}$ are the kth bases (where $k = 1, 2, ..., K$) of the feature vectors $X_i$ and $X_j$, while $d(x_{ki}, x_{kj})$ is the Euclidean distance between $x_{ki}$ and $x_{kj}$ (note that the bases $x_{ki}$ and $x_{kj}$ of the feature vectors may be scalars, or vectors of two or more dimensions), and $w_k$ is a weighting parameter set for the kth basis of the feature vectors.

[Math. 1]

$$D\left(X_i, X_j\right) = \sum_{k=1}^{K} w_k d\left(x_{ki}, x_{kj}\right)$$

(Formula 1)

Additionally, on the basis of the above distance function $D(X_i, X_j)$, a similarity function $F(X_i, X_j)$ between the feature vectors $X_i$ and $X_j$ may be defined like in Formula 2 below. Note that the similarity function is not limited to this example, and an arbitrary function that takes a larger value as the distance between feature vectors decreases may be defined.

[Math. 2]

$$F\left(X_i, X_j\right) = \exp\left(- D\left(X_i, X_j\right)\right)$$

(Formula 2)

Herein, the weighting parameter $w_k$ in the distance function $D(X_i, X_j)$ may be considered to be a parameter set for each item of a feature in order to compute the similarity of a property or a transaction using the similarity function $F(X_i, X_j)$. In other words, the kth basis of the feature vectors corresponds to some item of a feature, and the weighting parameter $w_k$ is set as a parameter that expresses the degree to which that item influences the similarity. More specifically, for example, in the vector of the property features, if the kth basis corresponds to the year of the construction date (or the age of the building), and the (k+1)th basis corresponds to the month of the construction date, typically the year has greater influence on the similarity of the property (as a specific example, given a Building 1 constructed in April 2011, a Building 2 constructed in October 2011, and a Building 3 constructed in April 2001, the similarity between Building 1 and Building 2 is high, while the similarity between Buildings 1 and 2 and Building 3 is low). Consequently, the weighting parameter $w_k$ set for the kth basis of the feature vectors may take a greater value than the weighting parameter $w_{k+1}$ set for the (k+1)th basis.

Such a weighting parameter $w_k$ may also be set in advance on the basis of preexisting knowledge, for example. Also, the weighting parameter $w_k$ may be decided and updated by machine learning performed by the machine learning unit 3303 on the basis of data about transactions established in the past. More specifically, for example, if the contract prices are close to each other in the past transactions of properties determined to have a high similarity by the similarity

function $F(X_i, X_j)$, the weighting parameters $w_k$ used to compute the similarity for these properties are considered suitable. On the other hand, if the contract prices are distant from each other for properties determined to have a high similarity by the similarity function $F(X_i, X_j)$, there is a possibility that the weighting parameters $w_k$ used to compute the similarity of these properties may include parameters which need correction. Note that in the determination of the closeness of contract prices, a price prediction correction function described later may be taken into account.

For example, with respect to the feature vector $X_i$ of a target property for which similar properties are to be extracted, the information extraction unit 3305 computes the values of the similarity function $F(X_i, X_j)$ for j = 1, 2, ..., i-1, i+1, ..., N, and extracts properties corresponding to the feature vector $X_j$ for which the value falls below a threshold as similar properties. Alternatively, the information extraction unit 3305 may extract properties corresponding to a certain number of feature vectors $X_j$ in order of largest value of the similarity function $F(X_i, X_j)$ as similar properties. Note that, as described already, not only the extraction of similar properties but also the extraction of similar transactions may also be performed in a similar manner.

(4. Process of predicting price based on price of similar property or similar transaction)

Next, a process of predicting the price of a real estate property performed by the transaction result prediction unit 3307 included in the processing unit 330 of the server 300 in the present embodiment will be described further. Note that although the following describes prediction based on the price of a similar property as a representative example, prediction based on the price of a similar transaction may be performed in a similar manner.

Prior to making a prediction based on the price of a similar property, the information extraction unit 3305 extracts a similar property (second real estate property) that is similar to a first real estate property which is the target of prediction, on the basis of the property feature data 3109. The extraction of the second real estate property may be performed when executing the price prediction, or may be performed in advance. The transaction result prediction unit 3307 predicts the price of the first real estate property on the basis of the price of the second real estate property. The price used at this point may be the selling price included in the selling data 3103, or the contract price in the most recent transaction for the second real estate property included in the transaction data 3105, for example. These prices may be included in the property feature data 3109 as the most recent price, or the selling data 3103 and the transaction data 3105 may be referenced for the second real estate property extracted by the transaction result prediction unit 3307, for example.

At this point, when predicting the price, the transaction result prediction unit 3307 corrects the predicted price on the basis of the difference between the features of the first real estate property and the features of the second real estate property. Hypothetically, provided that the first real estate property and the second real estate property have identical features except for area, the predicted price may be the contract price or the selling price per unit area of the second real estate property, multiplied by the area of the first real estate property. However, in actuality, no two properties have identical features, and several differences exist between the features, even for similar properties. Accordingly, when predicting the price of the first real estate property on the basis of the price of the second real estate property, the transaction result prediction unit 3307 corrects the predicted price on the basis of the differences between the features.

More specifically, for example, the transaction result prediction unit 3307 corrects a predicted price $q_{ts}$ for the first real estate property (property feature vector $X_s$) based on the price $p_t$ of the second real estate property (property feature vector $X_t$), according to Formula 3 below. Note that the price $p_t$ and the predicted price $q_{ts}$ are prices per unit area.

[Math. 3]

$$q_{ts} = p_t G(X_s, X_t)$$

(Formula 3)

The correction function $G(X_s, X_t)$ used in Formula 3 is defined like in Formula 4 below, for example. Note that, similarly to Formula 1, $x_{ks}$ and $x_{kt}$ are the kth bases (where k = 1, 2, ..., K) of the feature vectors $X_s$ and $X_t$, while $d(x_{ks}, x_{kt})$ corresponds to the Euclidean distance between $x_{ks}$ and $x_{kt}$ (note that in Formula 4, $d(x_{ks}, x_{kt})$ may also be defined differently from Formula 1 above. For example, if $x_{ks}$ and $x_{kt}$ are vectors, $d(x_{ks}, x_{kt}) = \|x_{ks}-x_{kt}\|$ is defined similarly to the case of Formula 1, but if $x_{ks}$ and $x_{kt}$ are scalars, the sign may be taken into account, and $d(x_{ks}, x_{kt}) = x_{ks}-x_{kt}$ may be defined), $r_k$ is a weighting parameter for correction, set for the kth basis of the feature vectors.

Note that Formula 4 is an example of a function in which each basis of the direct product ($\Pi$) becomes 1 in the case where $r_k \cdot d(x_{ks}, x_{kt})=0$, becomes greater than 1 in the case where the value of $r_k \cdot d(x_{ks}, x_{kt})$ is greater than 0, and becomes less than 1 approaching 0 in the case where the value of $r_k \cdot d(x_{ks}, x_{kt})$ is less than 0. Consequently, in the present embodiment, the function is not limited to the specific function indicated as Formula 4, and another function having similar properties may also be used, for example. Also, as described later, a configuration is also possible in which the weighting parameter $r_k$ is learned for each combination of the kth basis vectors.

[Math. 4]

$$G(X_s, X_t) = \prod_{k=1}^{K} \exp(r_k \cdot d(x_{ks}, x_{kt}))$$

(Formula 4)

The transaction result prediction unit 3307 computes the predicted price qs by the weighted addition of the predicted price $q_{ts}$ computed as above for each similar property (second real estate property). The addition of the predicted price $q_{ts}$ is performed by setting weights on the basis of the similarity function F(X$_i$, X$_j$) like in Formula 5 below, for example. In this case, the predicted price $q_{ts}$ for the tth similar property (where t = 1, 2, ..., T; T ≥ 1) is summed by applying a weight corresponding to the ratio of the similarity of the tth similar property with respect to the total sum of the similarity of all similar properties up to the Tth.

[Math. 5]

$$q_s = \sum_{t=1}^{T} q_{ts} \frac{F(X_s, X_t)}{\sum_{\tau=1}^{T} F(X_s, X_\tau)}$$

(Formula 5)

As described already, although the above describes price prediction based on the price of a similar property as a representative example, price prediction based on the price of a similar transaction may be performed in a similar manner. In this case, the information extraction unit 3305 extracts a second transaction as a similar transaction that is similar to a first transaction, and the transaction result prediction unit 3307 predicts the price of the first transaction on the basis of the contract price in the second transaction. The second transaction extracted at this point may also include multiple transactions occurring for the same property. Also, a transaction that has occurred in the past with respect to the real estate property which is the target of the first transaction may also be extracted as the second transaction.

In the price prediction based on the price of a similar transaction as above, the first transaction may be a transaction currently in progress, or in other words a transaction that has not been established yet. The features of such a transaction that has not been established yet are extracted from the selling data 3103 if selling has already started, for example. Alternatively, by having features of the first transaction (such as the desired contract date and the reason for selling, for example) be input separately by a user or set automatically, it is also possible to predict the price for a virtual transaction which has not started yet.

Conversely, price prediction may be performed by treating an already established transaction as the first transaction, and the result may be utilized for parameter learning by the machine learning unit 3303. More specifically, for example, a one transaction may be extracted from the transaction data 3105 and treated as the first transaction after first masking the contract price $p_i$. In this case, let $q_i$ be the price of the real estate property in the first transaction predicted by the transaction result prediction unit 3307 on the basis of the price of a similar transaction (second transaction) extracted by the information extraction unit 3305. In this case, the machine learning unit 3303 is able to decide various parameters (for example, the weighting parameter $w_k$ for computing similarity described in Formula 1, and the weighting parameter $r_k$ for correction described in Formula 4) by which the error R between the predicted price $q_i$ and the actual contract price $p_i$ as expressed in Formula 6 below becomes minimized, for example. Such learning for deciding parameters may be performed by utilizing any of various types of techniques, such as the gradient method, for example.

[Math. 6]

$$E = \sum_{i} (\log(p_i) - \log(q_i))^2$$

(Formula 6)

(5. Process of predicting selling duration)

Next, a process of predicting the selling duration of a real estate property performed by the transaction result prediction unit 3307 included in the processing unit 330 of the server 300 in the present embodiment will be described further.

Prior to predicting the selling duration, the information extraction unit 3305 extracts a similar transaction (second transaction) that is similar to a first transaction occurring with respect to a first real estate property which is the target of prediction, on the basis of the transaction feature data 3111. Similarly to the case of price prediction, the extraction of the second transaction may be performed when executing the selling duration prediction, or may be performed in advance. The transaction result prediction unit 3307 predicts the selling duration of the first transaction on the basis of the selling duration of the second transaction. At this point, when predicting the first selling duration on the basis of the selling duration of the second transaction, the transaction result prediction unit 3307 may also add several elements to the feature vector of the transaction extracted by the information extraction unit 3305.

For example, the transaction result prediction unit 3307 may add the difference between the selling price and the contract price (per unit area) to the elements of the feature vector. For the second transaction which has already been established, the selling price and the contract price are specifiable from the information extracted from the transaction history data 3105, for example. On the other hand, for the first transaction, a price predicted by the transaction result prediction unit 3307 through the price prediction process based on the price of a similar property or a similar transaction described above is treated as the contract price. The selling price of the first transaction is extracted from the selling data 3103 if selling has already started, for example. Alternatively, by having a user separately input a desired selling price, it is also possible to predict the selling duration for the case of an arbitrary selling price.

As another example, the transaction result prediction unit 3307 may add the number of real estate properties being sold in parallel to the elements of the feature vector. For the second transaction which has already been established, the number of real estate properties being sold in parallel is specifiable by counting the other transactions with overlapping selling durations in the transaction history data 3105, for example. On the other hand, for the first transaction, the number of real estate properties being sold in parallel is specifiable by counting the other real estate properties currently for sale in the selling data 3103. Note that if there is a wide range of real estate property types being handled or if the region is broad, the real estate properties being sold in parallel may be limited to properties whose location is close to the target property (the first real estate property or the second real estate property), or to properties whose features are similar to the target property.

When predicting the selling duration, the transaction result prediction unit 3307 likewise corrects the predicted selling duration on the basis of the difference between the features of the first transaction and the features of the second transaction. The correction of the selling duration is performed similarly to the correction of the predicted price described with reference to Formula 3 and Formula 4 above, for example. Note that, as described above, in the prediction of the selling duration according to the present embodiment, factors such as the difference between the selling price and the contract price or the number of real estate properties being sold in parallel are added to the feature vector as factors having a deep relationship with variation in the selling duration. Consequently, the weighting parameter for correction (the parameter $r_k$ in Formula 4) may be set to a particularly large value for the bases of the vectors corresponding to these factors. Also, for the selling duration, a final predicted result likewise may be computed by adding together the selling duration of each similar transaction after first setting weights on the basis of a similarity function, similarly to the example indicated in Formula 5. Similarly to price prediction, it is likewise possible to perform selling duration prediction in which an already established transaction is treated as the first transaction, and utilize the result for parameter learning by the machine learning unit 3303.

(6. Process of computing prediction accuracy)

Next, a process of computing the prediction accuracy of the price or the selling duration of a real estate property performed by the transaction result prediction unit 3307 included in the processing unit 330 of the server 300 in the present embodiment will be described further.

As described already, the transaction result prediction unit 3307 may perform prediction of the price or the selling duration in which an already established transaction is treated as the first transaction, and thereby is able to compute the error between the predicted result and the actual result. Utilizing the above, the transaction result prediction unit 3307 is able to compute a confidence band of the predicted result. More specifically, for example, in the case of price prediction, an error ratio $Er_i$ may be computed from the actual contract price $p_i$ and the predicted price $q_i$ as expressed in Formula 7 below. Note that although the following example describes the case of price, the prediction accuracy (confidence band) may also be computed similar for duration.

[Math. 7]

$$Er_i = \frac{q_i - p_i}{p_i}$$

(Formula 7)

For example, the error ratios $Er_i$ computed for respective transactions (where i = 1, 2, ..., N) may be divided into plus and minus values, and the error ratios $Er_i$ corresponding to the top 70% for each in order of smallest absolute value of the error ratio $Er_i$ may be treated as confidence band ratios (a positive confidence band ratio $r_p$, and a negative confidence band ratio $r_m$). When predicting the price of a real estate property (first real estate property) in a transaction (first transaction) currently in progress, the transaction result prediction unit 3307 is able to compute the confidence band with respect to the predicted price q as a plus-side $q \cdot r_p$ and a minus-side $q \cdot (-r_m)$.

Herein, the confidence band ratios $r_p$ and $r_i$ may be computed by the machine learning unit 3303 with respect to all transactions included in the transaction history data 3105, for example. In this case, the confidence band ratios $r_p$ and $r_i$ indicate the prediction confidence for the system as a whole at that time. Alternatively, when predicting the price or the selling duration of a property, the confidence band ratios $r_p$ and $r_i$ may be computed by the transaction result prediction unit 3307 with respect to a similar transaction (second transaction) extracted by the information extraction unit 3305 for the first transaction which is the target of prediction. In this case, the confidence band ratios $r_p$ and $r_i$ indicate the prediction confidence among the transaction group having a degree of similarity to be used for prediction.

In addition, confidence band ratios may also be classified in accordance with the similarity of a similar property or a similar transaction extracted when predicting the price or the selling duration. The similarity and number of similar properties or similar transactions extracted when predicting the price or the selling duration is considered to influence the prediction confidence. For example, the prediction confidence may rise if a large number of similar properties or similar transactions having a high similarity is extracted. Conversely, the prediction confidence may fall if a small number of similar properties or similar transactions having a low similarity is extracted. Accordingly, for example, when computing the error ratio $Er_i$ for each transaction, the machine learning unit 3303 may also compute the total similarity $R_i$ of the similar properties or similar transactions used for prediction according to Formula 8 below, and compute confidence band ratios $r_p$ and $r_m$ for individual ranges of the total similarity $R_i$. Note that the similarity function $F(X_i, X_j)$ may be similar to the one defined in Formula 2, for example.
[Math. 8]

$$R_i = \sum_{j=1}^{N} F\left(X_i, X_j\right)$$

(Formula 8)

In this case, the transaction result prediction unit 3307 specifies which range contains the total confidence $R_i$ of the similar properties or similar transactions extracted for the first transaction which is the target of prediction, and uses the confidence band ratios $r_p$ and $r_m$ computed in correspondence with the relevant range to compute confidence bands $q \cdot r_p$ and $q \cdot (-r_m)$ for the predicted price q.

Note that the method of computing a confidence band of prediction in the present embodiment is not limited to the above example. For example, a confidence band may also be computed in accordance with whether or not a transaction history exists for another property associated with the same apartment name in the property data 3101, or in other words, whether or not there is an example of a transaction already established for the same apartment. In this case, if there is an example of a transaction already established, the confidence band ratio may be narrowed, and the confidence may be expressed as high.

(7. Binarization of bases of feature vectors)

In the above description, it is described that the kth basis $x_{ki}$ of the feature vector $X_i$ utilized in the processes by the information extraction unit 3305 and the transaction result prediction unit 3307 in the present embodiment may be a scalar, or may be a vector of two or more dimensions. In this case, in the computation of the similarity of feature vectors and the correction of a predicted value based on the difference between feature vectors, the Euclidean distance $d(x_{ki}, x_{kj})$ between bases is computed.

However, as described with regard to the various types of data such as the property data 3101, the bases of a feature vector used in the present embodiment may include information which may not necessarily be expressed as as numerical value originally. For example, in the case of the property data 3101, information such as the ground area, the floor area, and the construction date is expressed as numerical values originally, but information such as the property type, facilities, and direction of openings is not expressed as numerical values originally.

Herein, as described with regard to the feature generation unit 3301 above, by setting category values such as "East=1, South=2, West=3, North=4" with respect to direction items, for example, it is possible to handle direction as a numerical value. However, if the basis $x_{ki}$ of a feature vector is a numerical value like such category values, the Euclidean distance $d(x_{ki}, x_{kj})$ between bases does not necessarily express the similarity between properties or transactions appropriately. For example, in the case of the direction example above, the distance between "East" and "West" and the distance between "South" and "North" are equal, but such treatment may not be appropriate in some cases.

Also, even in the case of information which is expressed as a numerical value originally, the Euclidean distance $d(x_{ki}, x_{kj})$ between bases, or the difference between numerical values if the bases are scalar, may not necessarily influence the similarity between properties or transactions uniformly. For example, the difference between a ground area of 40 m$^2$ and 70 m$^2$, and the difference between a ground area of 540 m$^2$ and 570 m$^2$, is 30 m$^2$ in both cases, but there is a possibility that this difference may influence the similarity between properties differently in each of the respective cases.

Accordingly, in the present embodiment, for a feature vector generated by the feature generation unit 3301 on the basis of various types of data, for example, the bases may be expressed as exclusive binary vectors. In this case, for example, in the direction example above, the bases of the feature vector expressing the direction become a four-dimensional vector, in which east is (1, 0, 0, 0), south is (0, 1, 0, 0), west is (0, 0, 1, 0), and north is (0, 0, 0, 1).

Also, in the case of a numerical value, as described earlier, it is possible to binarize data by dividing the range of the numerical value into bins of suitable width. In this case, for example, in the ground area example above, if bins with a width of 10 m$^2$ are set for the ground area, a vector is obtained in which, when the ground area is 40 m$^2$, the 4th basis of the vector becomes 1, or when the ground area is 570 m$^2$, the 57th basis becomes 1, while the remaining bases become 0. To keep the dimensionality of the vectors from becoming boundlessly large, a maximum value (for example, setting 1000 m$^2$ or more to the same bin) or a minimum value may also be set.

In a case of generating a feature vector in which the bases are binarized as above, the distance function between feature vectors described with reference to Formula 1 is replaced as indicated in Formula 9 below, for example. Note that m(ki) and m(kj) are the kth basis vectors of the feature vectors $X_i$ and $X_j$, and are the numbers of the bases which are 1 (for which the flag is raised), in which m(kj) $\in$ 1, 2, ..., M (where M is the dimensionality of the kth basis vector).
[Math. 9]

$$D\left(X_i, X_j\right) = \sum_{k=1}^{K} w_k\left(m(ki), m(kj)\right)$$

(Formula 9)

In this case, since the dimensionality M of the kth basis vector is finite, it is possible to learn the weighting parameter $w_k(m_1, m_2) \in$ 1, 2, ..., M ($_M C_2$ possibilities). With this arrangement, in the case of a category value, for example, how each category value influences the similarity between properties or transactions may be expressed by the weighting parameter $w_k(m_1, m_2)$ after the fact. In other words, in terms of the direction example above, how the similarity of properties or transactions is different between the case of east (1, 0, 0, 0) and the case of west (0, 0, 1, 0) (that is, how much distance the difference between east and west corresponds to) is expressed by the weighting parameter $w_k(1, 3)$ learned on the basis of factors such as the difference between the contract prices in actual transactions.

Also, in the case of a numerical value, for example, changes in the influence that the difference exerts on the similarity depending on the range of the numerical value itself may be expressed by the weighting parameter $w_k(m_1, m_2)$. In other words, in terms of the ground area example above, the influence on the similarity due to the difference between 40 m$^2$ and 70 m$^2$ may be expressed individually by the weighting parameter $w_k(4, 7)$, while the influence on the similarity due to the difference between 540 m$^2$ and 570 m$^2$ may be expressed individually by the weighting parameter $w_k(54, 57)$. For example, in the weighting parameter $w_k(4, 7)$, differences between the contract prices in transactions of properties with comparatively narrow ground areas are reflected, and the way in which a difference of 30 m$^2$ exerts a large influence on the similarity may be expressed. On the other hand, in the weighting parameter $w_k(54, 57)$, differences between the contract prices in transactions of properties with comparatively wide ground areas are reflected, and the way in which a difference of about 30 m$^2$ does not exert much influence on the similarity may be expressed.

Also, in a case of generating a feature vector in which the bases are binarized as above, the correction function between feature vectors described with reference to Formula 4 is replaced as indicated in Formula 10 below, for example. Note that m(ki) and m(kj) are defined similarly as in Formula 9 above.
[Math. 10]

$$G\left(X_s, X_t\right) = \prod_{k=1}^{K} r_k\left(m(ki), m(kj)\right)$$

(Formula 10)

Similarly to the case of the similarity indicated in Formula 9, since the dimensionality M of the kth basis vector is finite, it is possible to learn the weighting parameter $r_k(m_1, m_2)$ for each combination of $m_1, m_2 \in 1, 2, ..., M$ ($_MC_2$ possibilities). With the weighting parameter $r_k(m_1, m_2)$, how much the predicted result should be corrected in accordance with category values or numerical values categorized into bins may be expressed on the basis of the learning results, for example.

(8. Example of presented information)

Hereinafter, an example of information presented in an embodiment of the present disclosure will be described with reference to an example of a screen displayed on a display included in the input/output unit 140 of the client 100, for example. Note that in the following description, an example of information presented when considering selling an apartment is described, but information may be presented similarly when considering selling a property other than an apartment, such as a freestanding building or land, for example. Also, it is possible to present similar information when considering purchasing a property.

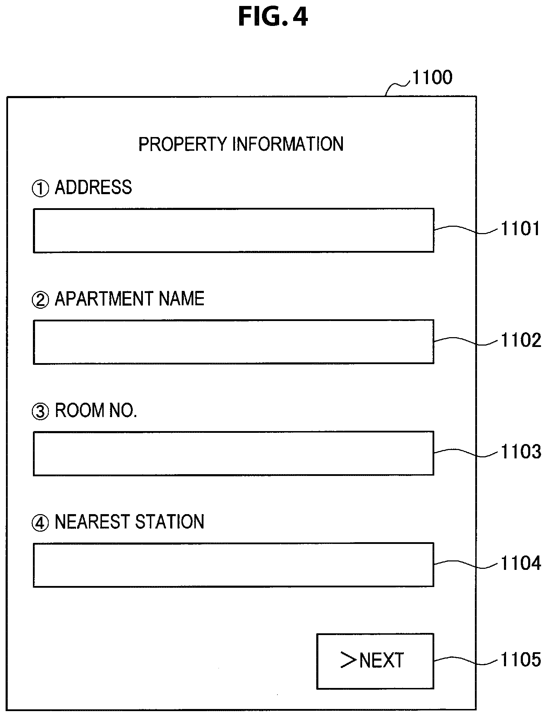

FIG. 4 is a diagram illustrating an example of a property information input screen displayed in an embodiment of the present disclosure. In the illustrated example, on a screen 1100, input fields for an address 1101, an apartment name 1102, a room number 1103, and a nearest station 1104 are displayed. A user inputs information into these input fields, and when finished, presses a "Next" button 1105. Note that at this point, if the apartment name input into the apartment name 1102 is already registered in the property data 3101, for example, other information, such as the address 1101 and the nearest station 1104, for example, may be set automatically. Alternatively, selectable information such as the room number 1103 and the nearest station 1104 may be displayed as a list.

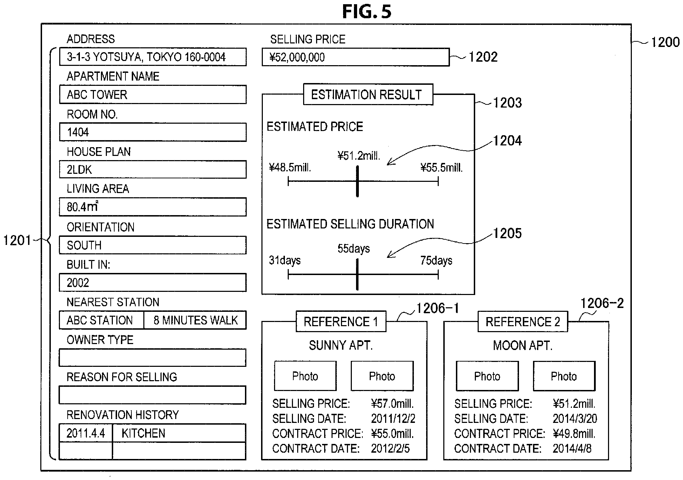

FIG. 5 is a diagram illustrating an example of a selling price review screen displayed in an embodiment of the present disclosure. In the illustrated example, on a screen 1200, detailed information 1201 about the property, including information input into the above property information input screen, for example (more specifically, the address, apartment name, room number, house plan, living area, direction, year of construction, nearest station, owner type, reason for selling, and renovation history), and a desired selling price 1202 are displayed. This information is displayed on the basis of user input and search results from the property data 3101 and the like based on information input by the user, for example. Additionally, on the screen 1200, a price (contract price) 1204 and a selling duration 1205 are displayed as the result 1203 of prediction performed by the transaction result prediction unit 3307 for a sell transaction. In the illustrated example, the price 1204 and the selling duration 1205 are displayed by a representative value (the predicted price and selling duration), and a variation segment on either side. The variation segment may be displayed on the basis of the confidence band of the predicted price or selling duration computed by the transaction result prediction unit 3307, for example.

In the above example, the detailed information 1201 and the desired selling price 1202 may be changeable at any time by direct user input or selection from a list, for example. In a case in which this information is changed, the information extraction unit 3305 and the transaction result prediction unit 3307 re-execute prediction of the price and the selling duration, for example, and the predicted results displayed as the price 1204 and the selling duration 1205 are updated.

Additionally, in the illustrated example, on the screen 1200, similar property information 1206 used to predict the price and the selling duration may also be displayed. In the illustrated example, similar property information 1206-1 and 1206-2 is displayed. Each set of similar property information 1206 includes the property name, photographs of the property, the selling price, the selling date, the contract price, and the contract date. Such information may be extracted from the transaction history data 3105 and the property data 3101, for example. By having the similar property information 1206 be displayed, the user is able to grasp the grounds of the prediction for the price 1204 and the selling duration 1205.

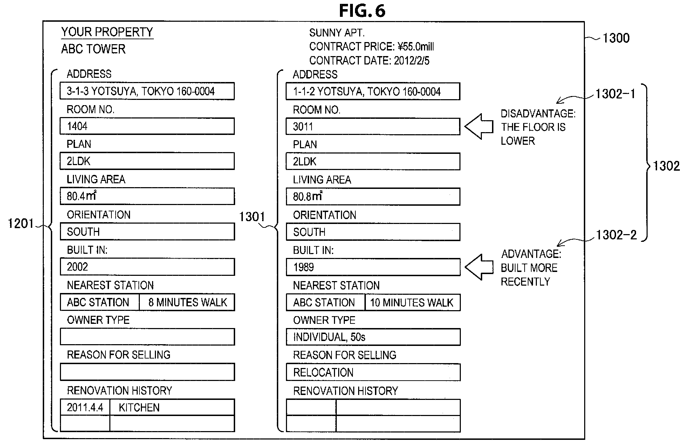

FIG. 6 is a diagram illustrating an example of a property comparison screen displayed in an embodiment of the present disclosure. In the illustrated example, on a screen 1300, detailed information 1201 about a property (a property the user is trying to sell) similar to the screen 1200 above and detailed information 1301 about a property being compared is displayed. The detailed information 1301 about a property being compared includes items shared in common with the detailed information 1201, for example. The detailed information 1301 is displayed on the basis of the property data 3101 and the transaction history data 3105. Note that in a case in which a property being compared is extracted on the basis of a past transaction result, the detailed information 1301 may be information from the time of the past transaction.

For example, the screen 1300 for property comparison is displayed as a result of one of the similar property information 1206 used to predict the price and selling duration being selected on the screen 1200 above (in the illustrated example, the similar property information 1206-1 has been selected). Additionally, on the screen 1300, comparison information 1302 may be displayed for items which are acting as the cause of the difference between the price or the selling duration of the property being compared, and the predicted price or selling duration. In the illustrated example, there is displayed disadvantage information 1302-1, which indicates that the prediction is corrected downward (corrected to a lower price and a longer selling duration) because the floor is lower compared to the property being compared, and advantage information 1302-2, which indicates that the predicted price is corrected upward (corrected to a higher price and a shorter selling duration) because the year of construction is newer compared to the property being compared Note that such comparison information 1302 may be displayed for items corresponding to the bases of feature vectors for which the weighting parameter $r_k$ for correction was a maximum or a minimum in the correction of the predicted result described with reference to Formula 4 or Formula 10, for example.

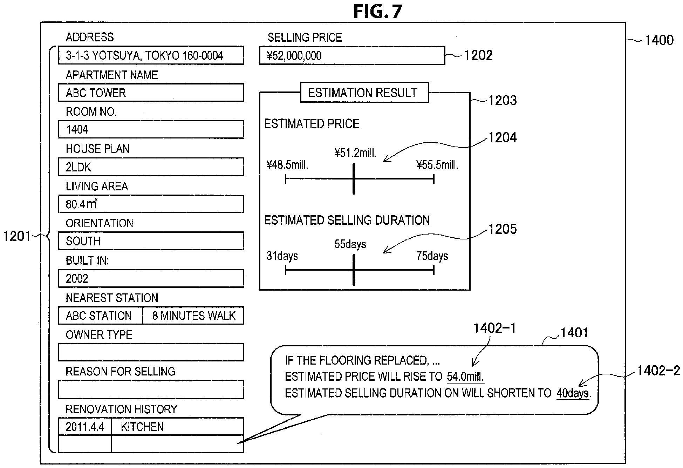

FIG. 7 is a diagram illustrating an example of a renovation proposal screen displayed in an embodiment of the present disclosure. In the illustrated example, on a screen 1400, detailed information 1201 about a property, a desired selling price 1202, and a predicted result 1203 similar to the screen 1200 above are displayed. Additionally, on the screen 1400, a renovation proposal 1401 is displayed. The renovation proposal 1401 includes a change in the predicted price 1402-1 and a change in the predicted selling duration 1402-2 in a case in which renovation is carried out.

In the illustrated example, the information extraction unit 3305 and the transaction result prediction unit 3307 are able to compute the predicted price 1204 and the predicted selling duration 1205 in a case in which renovation is carried out by virtually setting property features for the case in which renovation is carried out on the property for sale, similarly to the case in which the detailed information 1201 and the desired selling price 1202 are changed, for example. For example, for the highest among the predicted prices when predicted renovations are assumed to be carried out in this way, the information presentation unit 3309 generates and presents to the user the details of the renovation together with the renovation proposal 1401.

Note that the information extraction unit 3305, the transaction result prediction unit 3307, and the information presentation unit 3309 may also simulate variation in the predicted price and the predicted selling duration by temporarily switching some of the features of the property or transaction similarly for other items and not only renovation, and the information presentation unit 3309 may propose to the user effective measures for improving the transaction result. More specifically, for example, the variation in the predicted price and the predicted selling duration are computed by assuming costs spent on advertising to sell the property, and if increasing the amount of money to spend on advertising costs is estimated to be effective, for example, this measure may be proposed to the user. Also, as described in the next example, adjusting the selling date may also be proposed.

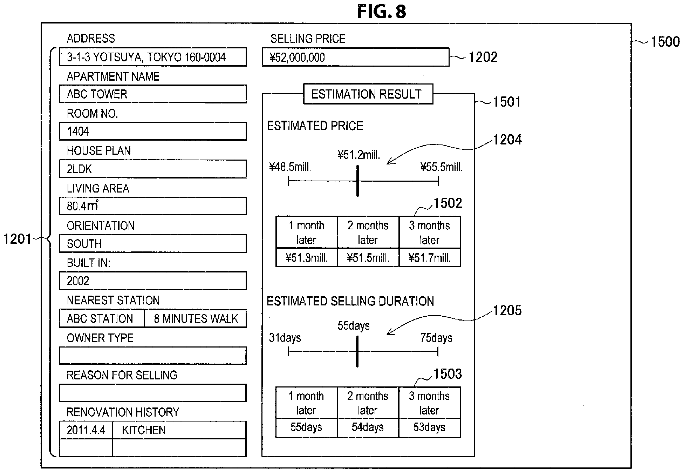

FIG. 8 is a diagram illustrating an example of a future prediction screen displayed in an embodiment of the present disclosure. In the illustrated example, on a screen 1500, detailed information 1201 about a property and a desired selling price 1202 similar to the screen 1200 above are displayed. Additionally, on the screen 1500, in addition to a predicted price 1204 and a predicted selling duration 1205 similar to the screen 1200, a future predicted price 1502 and a future predicted selling duration 1503 are displayed as a predicted result 1501. Note that the future predicted price 1502 and the future predicted selling duration 1503 are displayed in a table format in the illustrated example, but may also be displayed by a representative value and a variation segment on either side, similarly to the predicted price 1204 and the predicted selling duration 1205.

The prediction of the price and the selling duration if the selling of the property is executed in the future may be executable similarly to the prediction at the present time, for example. At this point, for example, prediction may also be executed in which the transactions of other properties currently for sale at the present time are assumed to be finished (contracted) in the selling duration predicted for the selling of the other properties. In other words, for example, in a case in which, at the time of February 1, 2015 (the current time), the start of the selling of another property currently for sale is December 15, 2014, and the predicted selling duration for the other property is 60 days, when executing prediction for the time of March 1, 2015 (a future time), prediction may be executed in which the other property is assumed to be sold already (and is no longer a property being sold in parallel).

By predicting the price and the selling duration for a case in which selling is started at a future time as above, waiting to start selling until a future time at which there will be fewer properties being sold in parallel may be proposed, similarly to the renovation proposal 1401 above, for example.

Note that in the system 10 according to the embodiment described above, information utilizing predictions of the price and the selling duration is provided with respect to a user who is to sell a real estate property, but an embodiment of the present disclosure is not limited to such an example. For example, a system for providing similar information with respect to a user trying to purchase a real estate property may also be provided. In this case, the contract price may be predicted for a property already for sale. Alternatively, for a property not for sale yet, the selling price or the contract price in the hypothetical case of the property being offered for sale may be predicted.

(9. Hardware Configuration)

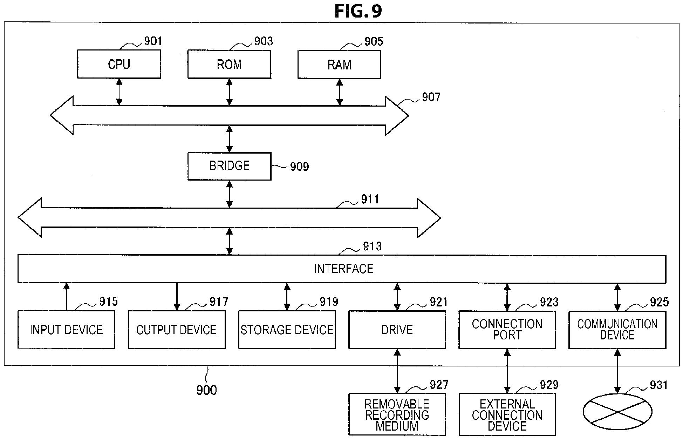

Next, with reference to FIG. 9, a hardware configuration of an information processing device according to an embodiment of the present disclosure is described. FIG. 9 is a block diagram illustrating a hardware configuration example of the information processing device according to the embodiment of the present disclosure. An illustrated information processing device 900 may achieve the server 300 or the client 100 in the above described embodiment.

The information processing device 900 includes a central processing unit (CPU) 901, read only memory (ROM) 903, and random access memory (RAM) 905. In addition, the information processing device 900 may include a host bus 907, a bridge 909, an external bus 911, an interface 913, an input device 915, an output device 917, a storage device 919, a drive 921, a connection port 923, and a communication device 925. The information processing device 900 may include a processing circuit such as a digital signal processor (DSP), an application-specific integrated circuit (ASIC), or a field-programmable gate array (FPGA), instead of or in addition to the CPU 901.

The CPU 901 functions as an arithmetic processing device and a control device, and controls the overall operation or a part of the operation of the information processing device 900 according to various programs recorded in the ROM 903, the RAM 905, the storage device 919, or a removable recording medium 927. The ROM 903 stores programs, operation parameters, and the like used by the CPU 901. The RAM 905 transiently stores programs used when the CPU 901 is executed, and parameters that change as appropriate when executing such programs. The CPU 901, the ROM 903, and the RAM 905 are connected with each other via the host bus 907 configured from an internal bus such as a CPU bus or the like. The host bus 907 is connected to the external bus 911 such as a Peripheral Component Interconnect/Interface (PCI) bus via the bridge 909.

The input device 915 is a device operated by a user such as a mouse, a keyboard, a touchscreen, a button, a switch, and a lever. The input device 915 may be a remote control device that uses, for example, infrared radiation and another type of radio waves. Alternatively, the input device 915 may be an external connection device 929 such as a mobile phone that corresponds to an operation of the information processing device 900. The input device 915 includes an input control circuit that generates input signals on the basis of information which is input by a user to output the generated input signals to the CPU 901. The user inputs various types of data and indicates a processing operation to the information processing device 900 by operating the input device 915.

The output device 917 is realized by a device capable of notifying the user of acquired information using senses such as vision, hearing, and touch. The output device 917 may be a display device such as a liquid crystal display (LCD) or an organic electro-luminescence (EL) display, an audio output device such as one or more speakers or headphones, or a device such as a vibrator. The output device 917 outputs results obtained from processing by the information processing device 900 in the form of visual information such as text or an image, in the form of audio such as speech or sound, or in the form of vibration or the like.

The storage device 919 is a device for data storage that is an example of a storage unit of the information processing device 900. The storage device 919 includes, for example, a magnetic storage device such as a hard disk drive (HDD), a semiconductor storage device, an optical storage device, or a magneto-optical storage device. The storage device 919 stores therein the programs and various data executed by the CPU 901, and various data acquired from an outside.

The drive 921 is a reader/writer for the removable recording medium 927 such as a magnetic disk, an optical disc, a magneto-optical disk, and a semiconductor memory, and built in or externally attached to the information processing device 900. The drive 921 reads out information recorded on the mounted removable recording medium 927, and outputs the information to the RAM 905. The drive 921 writes the record into the mounted removable recording medium 927.

The connection port 923 is a port used to connect devices to the information processing device 900. The connection port 923 may be a Universal Serial Bus (USB) port, an IEEE1394 port, or a Small Computer System Interface (SCSI) port, for example. The connection port 923 may also be an RS-232C port, an optical audio terminal, a High-Definition Multimedia Interface (HDMI (registered trademark)) port, and so on. The connection of the external connection device 929 to the connection port 923 makes it possible to exchange various kinds of data between the information processing device 900 and the external connection device 929.

The communication device 925 is a communication interface including, for example, a communication device for connection to a communication network 931. The communication device 925 may be a communication card for, for example, a local area network (LAN), Bluetooth (registered trademark), Wi-Fi, or a wireless USB (WUSB). The communication device 925 may also be, for example, a router for optical communication, a router for asymmetric digital subscriber line (ADSL), or a modem for various types of communication. For example, the communication device 925 transmits and receives signals in the Internet or transits signals to and receives signals from another communication device by using a predetermined protocol such as TCP/IP. The communication network 931 to which the communication device 925 connects is a network established through wired or wireless connection. The communication network 931 is, for example, the Internet, a home LAN, infrared communication, radio wave communication, or satellite communication.

The example of the hardware configuration of the information processing device 900 has been described. Each of the structural elements described above may be configured by using a general purpose component or may be configured by hardware specialized for the function of each of the structural elements. The configuration may be changed as necessary in accordance with the state of the art at the time of working of the present disclosure.

(10. Supplement)

The embodiments of the present disclosure may include, for example, the above-described information processing apparatus (a server or a client), system, an information processing method executed by the information processing apparatus or the system, a program for causing the information processing device to exhibit its function, and a non-transitory tangible medium having the program stored therein.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art based on the description of this specification.

Additionally, the present technology may also be configured as below.

(1) An information processing device, including:

an information extraction unit that extracts information related to a second real estate property or a second transaction similar to a first real estate property or a first transaction occurring with respect to the first real estate property, on a basis of features of a real estate property or a transaction with respect to a real estate property; and
a transaction result prediction unit that predicts a transaction result including a first price associated with the first real estate property in the first transaction, on a basis of the extracted information.

(2) The information processing device according to (1), in which
the extracted information includes information about a second price associated with the second real estate property or the second transaction, and
the transaction result prediction unit predicts the first price on a basis of the second price.
(3) The information processing device according to (2), in which
the transaction result prediction unit predicts the first price by correcting the second price in accordance with a difference between the features of the second real estate property or the second transaction and the first real estate property or the first transaction.
(4) The information processing device according to (2) or (3), in which
the second price includes a selling price of the second real estate property or a contract price of the second transaction.
(5) The information processing device according to any one of (1) to (4), in which
the extracted information includes information about a second duration associated with the second real estate property or the second transaction, and
the transaction result prediction unit predicts the transaction result that additionally includes a first duration associated with the first real estate property in the first transaction.
(6) The information processing device according to (5), in which
the transaction result prediction unit predicts the first duration by correcting the first duration in accordance with a difference between the features of the second real estate property or the second transaction and the first real estate property or the first transaction.
(7) The information processing device according to (6), in which
the features include a feature corresponding to a difference between a selling price of the first real estate property in the first transaction and the first price predicted by the transaction prediction unit, and a difference between a selling price and a contract price of the second real estate property in the second transaction.
(8) The information processing device according to (6) or (7), in which
the features include a feature corresponding to a number of other real estate properties being sold in parallel with the first transaction, and a number of other real estate properties being sold in parallel with the second transaction.
(9) The information processing device according to any one of (1) to (8), in which
the transaction result prediction unit computes a prediction accuracy of the transaction result.
(10) The information processing device according to (9), in which
the prediction accuracy includes a confidence band with respect to the first price.
(11) The information processing device according to (9) or (10), in which
the transaction result additionally includes a first duration associated with the first real estate property in the first transaction, and
the prediction accuracy includes a confidence band with respect to the first duration.
(12) The information processing device according to any one of (9) to (11), in which

**EP 3 267 390 A1**

the transaction result prediction unit computes the prediction accuracy for individual similarities of the second real estate property or the second transaction with respect to the first real estate property or the first transaction.

(13) The information processing device according to any one of (1) to (12), in which

the first transaction is a transaction not yet established,

the second transaction is a transaction already established, and

the transaction result prediction unit predicts the unknown transaction result for the first transaction.

(14) The information processing device according to any one of (1) to (12), in which

the first transaction and the second transaction are transactions already established, and

the information processing device further includes a parameter specification unit that specifies a parameter to be used by the information extraction unit or the transaction result prediction unit, on a basis of a difference between the transaction result predicted by the transaction result prediction unit and an actual transaction result for the first transaction.

(15) The information processing device according to (14), in which

the parameter specification unit specifies a parameter by which the information extraction unit determines whether or not the second real estate property or the second transaction is similar to the first real estate property or the first transaction.

(16) The information processing device according to (14) or (15), in which

the parameter specification unit specifies a parameter by which the transaction result prediction unit corrects a price or a duration related to the second real estate property or the second transaction to predict the transaction result.

(17) The information processing device according to any one of (1) to (16), in which

the information extraction unit extracts information related to the second real estate property or the second transaction after first temporarily replacing a subset of features of the first real estate property or the first transaction, and

the information processing device further includes an information presentation unit that presents information including the transaction result predicted by first replacing a subset of the features as a proposal for improving the transaction result for the first transaction.

(18) The information processing device according to (17), in which

the replacement of a subset of the features includes a renovation of the first real estate property, a change of advertising costs, or a change of selling date for the first transaction.

(19) An information processing method, executed by a processor, including:

extracting information related to a second real estate property or a second transaction similar to a first real estate property or a first transaction occurring with respect to the first real estate property, on a basis of features of a real estate property or a transaction with respect to a real estate property; and

predicting a transaction result including a first price associated with the first real estate property in the first transaction, on a basis of the extracted information.

(20) A program causing a computer to realize:

a function of extracting information related to a second real estate property or a second transaction similar to a first real estate property or a first transaction occurring with respect to the first real estate property, on a basis of features of a real estate property or a transaction with respect to a real estate property; and

a function of predicting a transaction result including a first price associated with the first real estate property in the first transaction, on a basis of the extracted information.

Reference Signs List

| 10 | system |
|----|--------|
| 100 | client |
| 200 | network |
| 300 | server |
| 310 | database |
| 3101 | property data |
| 3103 | selling data |
| 3105 | transaction history data |
| 3107 | surrounding environment data |

3109    property feature data
3111    transaction feature data
3113    parameter data
320     communication unit
330     processing unit
3301    feature generation unit
3303    machine learning unit
3305    information extraction unit
3307    transaction result prediction unit
3309    information presentation unit


**Claims**

1.  An information processing device, comprising:

    an information extraction unit that extracts information related to a second real estate property or a second transaction similar to a first real estate property or a first transaction occurring with respect to the first real estate property, on a basis of features of a real estate property or a transaction with respect to a real estate property; and a transaction result prediction unit that predicts a transaction result including a first price associated with the first real estate property in the first transaction, on a basis of the extracted information.

2.  The information processing device according to claim 1, wherein
    the extracted information includes information about a second price associated with the second real estate property or the second transaction, and
    the transaction result prediction unit predicts the first price on a basis of the second price.

3.  The information processing device according to claim 2, wherein
    the transaction result prediction unit predicts the first price by correcting the second price in accordance with a difference between the features of the second real estate property or the second transaction and the first real estate property or the first transaction.

4.  The information processing device according to claim 2, wherein
    the second price includes a selling price of the second real estate property or a contract price of the second transaction.

5.  The information processing device according to claim 1, wherein
    the extracted information includes information about a second duration associated with the second real estate property or the second transaction, and
    the transaction result prediction unit predicts the transaction result that additionally includes a first duration associated with the first real estate property in the first transaction.

6.  The information processing device according to claim 5, wherein
    the transaction result prediction unit predicts the first duration by correcting the first duration in accordance with a difference between the features of the second real estate property or the second transaction and the first real estate property or the first transaction.

7.  The information processing device according to claim 6, wherein
    the features include a feature corresponding to a difference between a selling price of the first real estate property in the first transaction and the first price predicted by the transaction prediction unit, and a difference between a selling price and a contract price of the second real estate property in the second transaction.

8.  The information processing device according to claim 6, wherein
    the features include a feature corresponding to a number of other real estate properties being sold in parallel with the first transaction, and a number of other real estate properties being sold in parallel with the second transaction.

9.  The information processing device according to claim 1, wherein
    the transaction result prediction unit computes a prediction accuracy of the transaction result.

10. The information processing device according to claim 9, wherein
the prediction accuracy includes a confidence band with respect to the first price.

11. The information processing device according to claim 9, wherein
the transaction result additionally includes a first duration associated with the first real estate property in the first transaction, and
the prediction accuracy includes a confidence band with respect to the first duration.

12. The information processing device according to claim 9, wherein
the transaction result prediction unit computes the prediction accuracy for individual similarities of the second real estate property or the second transaction with respect to the first real estate property or the first transaction.

13. The information processing device according to claim 1, wherein
the first transaction is a transaction not yet established,
the second transaction is a transaction already established, and
the transaction result prediction unit predicts the unknown transaction result for the first transaction.

14. The information processing device according to claim 1, wherein
the first transaction and the second transaction are transactions already established, and
the information processing device further includes a parameter specification unit that specifies a parameter to be used by the information extraction unit or the transaction result prediction unit, on a basis of a difference between the transaction result predicted by the transaction result prediction unit and an actual transaction result for the first transaction.

15. The information processing device according to claim 14, wherein
the parameter specification unit specifies a parameter by which the information extraction unit determines whether or not the second real estate property or the second transaction is similar to the first real estate property or the first transaction.

16. The information processing device according to claim 14, wherein
the parameter specification unit specifies a parameter by which the transaction result prediction unit corrects a price or a duration related to the second real estate property or the second transaction to predict the transaction result.

17. The information processing device according to claim 1, wherein
the information extraction unit extracts information related to the second real estate property or the second transaction after first temporarily replacing a subset of features of the first real estate property or the first transaction, and
the information processing device further includes an information presentation unit that presents information including the transaction result predicted by first replacing a subset of the features as a proposal for improving the transaction result for the first transaction.

18. The information processing device according to claim 17, wherein
the replacement of a subset of the features includes a renovation of the first real estate property, a change of advertising costs, or a change of selling date for the first transaction.

19. An information processing method, executed by a processor, comprising:

extracting information related to a second real estate property or a second transaction similar to a first real estate property or a first transaction occurring with respect to the first real estate property, on a basis of features of a real estate property or a transaction with respect to a real estate property; and
predicting a transaction result including a first price associated with the first real estate property in the first transaction, on a basis of the extracted information.

20. A program causing a computer to realize:

a function of extracting information related to a second real estate property or a second transaction similar to a first real estate property or a first transaction occurring with respect to the first real estate property, on a basis of features of a real estate property or a transaction with respect to a real estate property; and
a function of predicting a transaction result including a first price associated with the first real estate property in the first transaction, on a basis of the extracted information.

# FIG. 1

**FIG. 2**

10

## FIG. 3

# FIG. 4

1100

PROPERTY INFORMATION

① ADDRESS

1101

② APARTMENT NAME

1102

③ ROOM NO.

1103

④ NEAREST STATION

1104

> NEXT

1105

## FIG. 5

ADDRESS

3-1-3 YOTSUYA, TOKYO 160-0004

APARTMENT NAME

ABC TOWER

ROOM NO.

1404

HOUSE PLAN

2LDK

LIVING AREA

80.4m²

ORIENTATION

SOUTH

BUILT IN:

2002

NEAREST STATION

| ABC STATION | 8 MINUTES WALK |

OWNER TYPE

REASON FOR SELLING

RENOVATION HISTORY

| 2011.4.4 | KITCHEN |
| | |

SELLING PRICE

¥52,000,000 ~1202

1201

1200

ESTIMATION RESULT ~1203

ESTIMATED PRICE

1204

¥48.5mill.  ¥51.2mill.  ¥55.5mill.

ESTIMATED SELLING DURATION

1205

31days  55days  75days

REFERENCE 1  ~1206-1

SUNNY APT.

Photo   Photo

SELLING PRICE:    ¥57.0mill.
SELLING DATE:    2011/12/2
CONTRACT PRICE:  ¥55.0mill.
CONTRACT DATE:   2012/2/5

REFERENCE 2  1206-2

MOON APT.

Photo   Photo

SELLING PRICE:    ¥51.2mill.
SELLING DATE:    2014/3/20
CONTRACT PRICE:  ¥49.8mill.
CONTRACT DATE:   2014/4/8

## FIG. 6

YOUR PROPERTY
ABC TOWER

ADDRESS
3-1-3 YOTSUYA, TOKYO 160-0004

ROOM NO.
1404

PLAN
2LDK

LIVING AREA
80.4㎡

ORIENTATION
SOUTH

BUILT IN:
2002

NEAREST STATION

| ABC STATION | 8 MINUTES WALK |
|---|---|

OWNER TYPE

REASON FOR SELLING

RENOVATION HISTORY

| 2011.4.4 | KITCHEN |
|---|---|

SUNNY APT.
CONTRACT PRICE: ¥55.0mill
CONTRACT DATE: 2012/2/5

ADDRESS
1-1-2 YOTSUYA, TOKYO 160-0004

ROOM NO.
3011

DISADVANTAGE:
THE FLOOR IS
LOWER

PLAN
2LDK

LIVING AREA
80.8㎡

ORIENTATION
SOUTH

BUILT IN:
1989

ADVANTAGE:
BUILT MORE
RECENTLY

NEAREST STATION

| ABC STATION | 10 MINUTES WALK |
|---|---|

OWNER TYPE
INDIVIDUAL, 50s

REASON FOR SELLING
RELOCATION

RENOVATION HISTORY

| | |
|---|---|

1300
1302-1
1302
1302-2
1201
1301

## FIG. 7

ADDRESS
3-1-3 YOTSUYA, TOKYO 160-0004

APARTMENT NAME
ABC TOWER

ROOM NO.
1404

HOUSE PLAN
2LDK

LIVING AREA
80.4m²

ORIENTATION
SOUTH

BUILT IN:
2002

NEAREST STATION
ABC STATION | 8 MINUTES WALK

OWNER TYPE

REASON FOR SELLING

RENOVATION HISTORY
2011.4.4 | KITCHEN

1201

SELLING PRICE
¥52,000,000 — 1202

ESTIMATION RESULT — 1203

ESTIMATED PRICE — 1204

¥51.2mill.
¥48.5mill.          ¥55.5mill.

ESTIMATED SELLING DURATION — 1205

55days
31days          75days

1402-1    1401

1402-2

IF THE FLOORING REPLACED, ...
ESTIMATED PRICE WILL RISE TO 54.0mill.
ESTIMATED SELLING DURATION ON WILL SHORTEN TO 40days.

1400

## FIG. 8

| ADDRESS | |
|---|---|
| 3-1-3 YOTSUYA, TOKYO 160-0004 | |

SELLING PRICE
¥52,000,000 ~1202

~1500

APARTMENT NAME
ABC TOWER

ESTIMATION RESULT ~1501

ROOM NO.
1404

ESTIMATED PRICE ~1204

HOUSE PLAN
2LDK

¥51.2mill.
¥48.5mill.    ¥55.5mill.

LIVING AREA
80.4㎡

~1502

ORIENTATION
SOUTH

1201

| 1 month later | 2 months later | 3 months later |
|---|---|---|
| ¥51.3mill. | ¥51.5mill. | ¥51.7mill. |

BUILT IN:
2002

NEAREST STATION

| ABC STATION | 8 MINUTES WALK |
|---|---|

ESTIMATED SELLING DURATION ~1205

OWNER TYPE

55days
31days    75days

REASON FOR SELLING

~1503

RENOVATION HISTORY

| 1 month later | 2 months later | 3 months later |
|---|---|---|
| 55days | 54days | 53days |

| 2011.4.4 | KITCHEN |
|---|---|
| | |

## FIG. 9

## INTERNATIONAL SEARCH REPORT

| International application No. |
| --- |
| PCT/JP2015/082832 |

A. CLASSIFICATION OF SUBJECT MATTER
*G06Q50/16*(2012.01)i, *G06Q30/02*(2012.01)i, *G06Q50/10*(2012.01)i

According to International Patent Classification (IPC) or to both national classification and IPC

B. FIELDS SEARCHED

Minimum documentation searched (classification system followed by classification symbols)
G06Q50/16, G06Q30/02, G06Q50/10

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2001-117973 A  (Recruit Co., Ltd.), 27 April 2001 (27.04.2001), | 1-4,9-16, 19-20 |
| Y | paragraphs [0084], [0090], [0093], [0097], [0106] to [0111]; fig. 21 (Family: none) | 5-8,17,18 |
| Y | JP 2013-167973 A  (Rakuten, Inc.), 29 August 2013 (29.08.2013), paragraphs [0064] to [0065] (Family: none) | 5-8 |
| Y | JP 2009-211324 A  (Kabushiki Kaisha Fudosan no Miki), 17 September 2009 (17.09.2009), paragraph [0025] (Family: none) | 7-8 |

[X] Further documents are listed in the continuation of Box C.   [ ] See patent family annex.

| | |
| --- | --- |
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    08 February 2016 (08.02.16) | Date of mailing of the international search report<br>    16 February 2016 (16.02.16) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

**INTERNATIONAL SEARCH REPORT**

International application No.

PCT/JP2015/082832

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-133260 A (Fudosan Infomedia Kabushiki Kaisha), 10 May 2002 (10.05.2002), paragraph [0111] (Family: none) | 7-8 |
| Y | JP 2001-256250 A (Kabushiki Kaisha Ai Frontier), 21 September 2001 (21.09.2001), paragraph [0008] (Family: none) | 17-18 |
| A | JP 2003-22314 A (Recruit Co., Ltd.), 24 January 2003 (24.01.2003), entire text (Family: none) | 1-20 |
| A | JP 2002-15049 A (Yugen Kaisha Microsh), 18 January 2002 (18.01.2002), paragraph [0019] (Family: none) | 1-20 |
| A | US 2014/0058961 A1 (REALAGILE, INC.), 27 February 2014 (27.02.2014), entire text (Family: none) | 1-20 |

Form PCT/ISA/210 (continuation of second sheet) (January 2015)

**EP 3 267 390 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2003281252 A